Europäisches Patentamt

European Patent Office

Office européen des brevets

(19)

(11) Veröffentlichungsnummer : **0 375 759 B1**

# (12) EUROPÄISCHE PATENTSCHRIFT

(45) Veröffentlichungstag der Patentschrift :
**29.04.92 Patentblatt 92/18**

(51) Int. Cl.$^5$ : **B01J 37/02**

(21) Anmeldenummer : **89906061.0**

(22) Anmeldetag : **26.05.89**

(86) Internationale Anmeldenummer :
**PCT/EP89/00586**

(87) Internationale Veröffentlichungsnummer :
**WO 90/00089 11.01.90 Gazette 90/02**

(54) VERFAHREN ZUR HERSTELLUNG EINES PLATTENFÖRMIGEN TRÄGERS KATALYTISCH WIRKENDER VERBINDUNGEN.

(30) Priorität : **29.06.88 DE 3821920**

(43) Veröffentlichungstag der Anmeldung :
**04.07.90 Patentblatt 90/27**

(45) Bekanntmachung des Hinweises auf die
Patenterteilung :
**29.04.92 Patentblatt 92/18**

(84) Benannte Vertragsstaaten :
**AT DE FR GB IT SE**

(73) Patentinhaber : **Kraftanlagen AG.**
**Im Breitspiel 7**
**W-6900 Heidelberg 1 (DE)**

(72) Erfinder : **KOTTER, Michael**
**Frühmessweinberg 22**
**W-7520 Bruchsal 4 (DE)**
Erfinder : **WEYLAND, Friedrich**
**Theodor-Heuss-Strasse 117**
**W-6906 Leimen-St.Ilgen (DE)**

(74) Vertreter : **Helber, Friedrich G., Dipl.-Ing. et al**
**Zenz, Helber & Hosbach Patentanwälte**
**Scheuergasse 24**
**W-6144 Zwingenberg (DE)**

**Beschreibung**

Die Erfindung betrifft ein Verfahren zur Herstellung eines plattenförmigen Trägers katalytisch wirkender Verbindungen unter Entfetten bzw. Beizen eines profilierten, vollflächigen oder gitterförmigen metallischen Grundgerüsts mit dem Auftragen einer Emaillebeschichtung.

Es sind die unterschiedlichsten Verfahren bekannt, um plattenförmige Träger katalytisch wirkender Verbindungen herzustellen. Mit dem Ziel einer kontinuierlichen, preisgünstigen Herstellung wurde bereits vorgeschlagen, kontinuierlich Metallbleche für das metallische Grundgerüst von einem Metallcoil abzuziehen, in Richtung der Bandbreite, also quer zur Transportrichtung, mit in einem bestimmten Raster versetzt angeordneten Einschnitten zu versehen, durch Strecken in Abzugs-, d.h. Transportrichtung des Bandes das Metallblech zu einem Streckmetallblech räumlich zu verformen und dieses zu entfetten. Auf die Oberfläche des entfetteten Streckmetallbleches wurde zunächst ein geschmolzenes Metall aufgespritzt, um auf die derart gebildete rauhe Oberfläche katalytisch wirkende Verbindungen aufzutragen. Zwischen blattförmigen Schutzlagen wurde nachfolgend schrittweise ein Formpressen zur Ausbildung von Rippen in Förder- oder Abzugsrichtung des Streckmetallbandes vorgenommen und schließlich das mit den katalytisch wirkenden Verbindungen versehene Streckmetallblech nach Entfernen der Schutzlagen in Maßabschnitte unterteilt (DE-PS 32 08 634). Derartige Katalysatorplatten bieten den Vorteil einer preisgünstigen Beschichtung unabhängig von einer besonderen Formgebung des Katalysator-Trägers. Diese plattenförmigen Träger katalytisch wirkender Verbindungen wurden u.a als Katalysatorplatten zur Entstickung von Abgasen vorgeschlagen.

Um eine zuverlässige Verbindung zwischen einem metallischen Träger und einer zur Aufnahme katalytisch wirkender Verbindungen bestimmten Beschichtung mit hoher Standzeit unter Temperaturwechselbeanspruchungen und hohen hydraulischen mechanischen Belastungen zur Verfügung zu stellen, ist bereits eine Trägermatrix zur Aufnahme katalytisch wirkender Verbindungen unter Verwendung von Keramik bekannt (DE-C-35 01 330). Bei dieser Lösung wird auf einen metallischen Träger zunächst eine Zwischenschicht aus Emaille und nachfolgend eine keramische Deckschicht zur Aufnahme der katalytisch wirkenden Verbindungen unter partiellem Einsinken der keramischen Deckschicht in die Zwischenschicht während der nachfolgenden Trocknung und dem Brand aufgebracht. Mit einem derartigen Schichtaufbau werden ein metallischer Träger, das Grundgerüst einerseits und eine keramische Beschichtung, die Deckschicht andererseits zuverlässig untereinander verbunden und zugleich unterschiedliche thermische und mechanische Wechselbeanspruchungen dieser Schichten ausgeglichen.

Desweiteren ist ein Verfahren zur Herstellung eines Wärme-, Temperatur- sowie bruchfesten Katalysators zur Abgasreinigung bekannt, bei dem auf ein nichtrostendes, zunderfreies und hitzebeständiges Grundgerüst nacheinander zunächst eine elastische Grundierung aus einem Aluminiumsilicat, nachfolgend eine katalytisch aktive Trägerschicht aufgetragen sowie getrocknet und schließlich eine Kalzinierung nachgeschaltet wird bevor eine Imprägnierung der Trägerschicht mit einem katalytisch aktiven Metalloxid oder Metall erfolgt (FR-A-2 215 266). In Abwandlung des Werkstoffs für das metallische Grundgerüst ist an Stelle von Edelstahl emaillierter Kohlenstoffstahl vorgesehen. Zum einen wird für den Ausgleich unterschiedlicher thermischer und mechanischer Beanspruchungen des Grundgerüsts und der Deckschicht eine Aluminiumsilicatschicht zwischen diesen Schichten eingeschaltet und zum anderen zur Aufnahme des katalytisch aktiven Metalls bzw. Metalloxids eine katalytisch aktive Trägerschicht eingesetzt.

Im Rahmen der Entstickung von Abgasen aus Feuerungsanlagen ist die Vergiftungsgefahr der katalytisch wirksamen Oberflächen des metallischen Trägers durch in den Abgasen enthaltene Verunreinigungen in besonderem Maße zu beachten. Diesbezügliche Erkenntnisse weisen daraufhin, daß die Gefahr der Vergiftung mit der Dauer des Kontakts der Katalysatorgifte auf den katalytisch wirksamen Oberflächen steigt. Es bietet sich an, die Träger katalytisch wirksamer Oberflächen in umlaufende! Regenerativ-Wärmetauschern an Stelle wärmetauschender Speichermassen anzuordnen, um die Träger der Katalytisch wirksamen Verbindurgen im Wechsel durch den Gasstrom eines reinen, beispielsneise des gereinigten und des zu reinigenden Gases zu beaufschlagen. Die für diese umlaufenden Regenerativ-Wärmetauscher entwickelten und bewährten Reinigungseinrichtungen lassen dann auf den katalytisch wirksam.en Oberflächen niedergeschlagene Katalysatorgifte laufend entfernen. Derartige Reinigungseinrichtungen bewirken jedoch zugleich durch die betriebliche Beaufschlagung der katalytisch wirksamen Oberflächen mit den Strahlen der Reinigungsmedien, vor allem Luft oder überhitzter Dampf, eine erhebliche Beanspruchunng dieser Oberflächen mit der Gefahr ihrer Ablösung.

Der Erfindung liegt die Aufgabe zugrunde, unabhängig von einer bestimmten Formgebung, plattenförmige Träger festhaftend mit einer Beschichtung katalytisch wirksamer Verbindungen zu versehen und insbesondere hierbei eine über die Gesamtfläche gleichmäßige Beschichtung zu erzielen.

Ausgehend von einem Verfahren der eingangs erwähnten Art ist das erfindungsgemäße Verfahren dadurch gekennzeichnet, daß das mit der Grundemaille beschichtete Grundgerüst dem Brand nachfolgend zunächst mit einem sich unter dem. Einfluß von Scherkräften verflüssigenden Katalysatorschlicker aus einem Pulver katalytisch wirkender Verbindungen, einem Bindemittel, Wasser sowie gegebenenfalls Netzmittel durch Eintauchen in ein bewegtes Katalysatorschlickerbad benetzt und das benetzte Grundgerüst unter Aufrechterhaltung der Bewegung des Schlickerbads wieder aus dem Bad entfern: und anschließend einer Trocknung zugeführt wird. Durch diese Lösung werden während des Eintauchens in das bewegte, durch die Einwirkung von Scherkräften dünnflüssige Schlickerbad, unabhängig von einer besonderen Formgebung, beispielsweise einer vielfachen Strukturierung, Bleche oder Gitter gleichmäßig mit der gewünschten Schichtstärke aufgrund der gewählten Schlickerkonsistenz benetzt. Durch die Bewegung des Katalysatorschlickers ausgelöste Scherkräfte verflüssigen den Katalysatorschlicker. Diese Scherkräfte betragen ein vielfaches der Erdkraft. Unmittelbar mit dem Austritt des Grundgerüsts aus dem Scllickerbad wird die Beschichtung aus katalytisch aktiven Verbindungen stabil, d.h. diese liegen in der festen Phase auf dem Grundgerüst vor und verbleiben unverändert auf diesem. Diese Art der Beschichtung erfolgt im Vergleich zu denen des Standes der Technik unter Einsatz geringer Verfahrensschritte für den Auftrag und unter weitgehendem Ausschluß von Verlusten an katalytisch aktiven Verbindungen.

Eingetaucht in das Schlickerbad wird insbesondere ein Eindringen des unter der Einwirkung von Scherkräften fließfähigen Katalysatorschlickers in die Vertiefungen der rauhen Emailledeckschicht und hierdurch eine mechanisch stabile Verzahnung von Emaille und Katalysatorbeschichtung erzielt. Beim Herausziehen der Bleche oder Gitter aus dem Bad verfestigt sich der Schlicker auf den Oberflächen des metallischen, emaillierten Trägers bereits soweit, daß er innerhalb der gewünschten Schichtstärke vorzugsweise 0,5 bis 2 mm unter dem Einfluß der Schwerkraft nicht mehr von der Oberfläche des plattenförmigen Trägers abfließt.

Der Katalysatorschlicker benetzt hierbei die Profilierung einer Trägerplatte derart, daß die Zunahme der Stärke der Trägerplatte durch die Beschichtung über die Gesamtfläche konstant bleibt, das heißt, daß beispielsweise Vertiefungen nicht mit dem Katalysatorschlicker aufgefüllt werden. Eine Trägerplatte kann hierdurch mit Schichtstärken bis zu 1 mm versehen werden.

Die kontinuierliche Benetzung des mit der Emaille versehenen Grundgerüsts unter Eintauchen in ein Schlickerbad in einer Abwärtsführung und Entnahme aus demselben in einer Aufwärtsführung oder aber die diskontinuierliche Benetzung unter periodischem Anheben eines Schlickerbads sowie dessen nachgeschaltetes Ansenken mit dem Weitertransport des benetzten Trägers ist gleichermaßen auf einzelne Träger je für sich als auch mehrere Träger zugleich anzuwenden und schließt selbst die Zusammenfassung mehrerer Träger innerhalb korbartiger Gestelle zur Benetzung nicht aus. Mit dieser Art der Benetzung mit einem Katalysatorschlicker unter Verflüssigung durch die Einwirkung von Scherkräften sind insbesondere auch bei der Zusammenfassung mehrerer, mit der Emaille versehener Grundgerüste innerhalb korbartiger Gestelle Verstopfung der Gasdurchgangskanäle während des Benetzungsvorgangs ausgeschlossen. Die Benetzung innerhalb korbartiger Gestelle ist somit auch auf die Aufgabe der Erneuerung von Beschichtungen anzuwenden.

Besonders vorteilhaft läßt sich die Bewegung des Schlickerbads durch Eintauschen eines Schwingungserregers oder Einsetzen eines Rührers in das Bad erreichen. Nach einer hiervon abweichenden Ausgestaltung wird das Schlickerbad ausgehend von einer oder mehreren Gefäßwandungen indirekt bewegt. Beispielsweise kann hierzu der Gefäßboden für das Schlickerbad auf einem Schwingungserreger abgestützt oder aber Schwinggeber an dem Mantel desselben angeordnet werden. Die Schwingungen können elektromechanisch, pneumatisch oder durch Ultraschall angeregt wreden, wobei ungeregelte Schwingungen unter Vermeiden stehender Wellen in dem Schlickerbad für die Benetzung des mit der Grundemaille beschichteten Grundgerüsts erzeugt werden.

Ein Zusatz blähfähiger Mittel, beispielsweise Silizium-Carbid zur Emaillefritte, fördert die Ausbildung einer porenarmen Unterschicht und einer rauhen Deckschicht. Während die porenarme Unterschicht gegenüber dem metallischen Grundgerüst sperrt, bewirken die beim Brand der Emaille aufgrund des Anteils blähfähiger Mittel aufsteigenden Gasblasen die Ausbildung einer rauhen und damit für den Katalysatorschlicker tragfähigen Deckschicht. Die Emailleschicht verbindet die Funktionen einer thermischen Ausgleichsschicht zwischen metallischem Träger sowie der Beschichtung aus katalytisch wirkenden Verbindungen mit denen einer Schutzschicht des metallischen Grundgerüsts und einer Haftschicht für die aufzubringende Beschichtung.

Die Verflüssigung des Schlickerbads unter der Einwirkung von Scherkräften läßt sich durch thixotropierend wirkende Zusätze, wie beispielsweise Xanthan, Carboxypolymethylen unterstützen. Eine andere Möglichkeit einer Verflüssigung des Katalysatorschlickers unter der Einwirkung von Scherkräften besteht in der Wahl der Korngrößenverteilung aufgrund der Herstellung des Pulvers katalytisch wirkender Verbindungen. Hierzu wird das Pulver in einer solchen Korngrößenverteilung eingesetzt, daß weniger als 1 Gew.% einen Korndurchmesser kleiner als 10 μm und weniger als 5 Gew.% einen Korndurchmesser größer 200 μm des Pulvers aufweisen.

Bei größerem Korndurchmesser in der Mischung des Pulvers katalytisch wirkender Verbindungen ist durch Aufmahlen gegebenenfalls unter Zusatz der zur Herstellung des Schlickers verwendeten Flüssigkeit die vorgezeichnete Korngrößenverteilung einzustellen. Besonders vorteilhaft für das Aufbringen einer fest haftenden Beschichtung ist ein Zusatz von bis zu 2% Netzmitteln und bis zu 5% von eine Verflüssigung des Schlickers bewirkenden Mitteln neben Wasser und/oder einem Bindemittel bis zu der Schlickerkonsistenz entsprechend der gewünschten Stärke der Beschichtung. Als Netzmittel sind beispielsweise organische Ester und als Bindemittel colloidales Siliziumdioxid geeignet.

Für eine Verfestigung der Beschichtung vorteilhaft ist eine der Benetzung mit der katalytisch wirkenden Verbindung und deren Trocknung auf dem emaillierten metallischen Grundgerüst nachgeschaltete Kalzinierung

Des weiteren vorteilhaft für eine Erhöhung der Festigkeit der Beschichtung aufgrund des Aufbaus von Feststoffbrücken ist eine Imprägnierung des beschichteten Trägers mit einem Alkylsilikat oder einer Lösung desselben. Hierfür kommen insbesondere Tetramethylorthosilikat oder Äthyl- bzw. Methylpolysilikat, gegebenenfalls in Mischung mit Industriealkoholen, insbesondere Methanol, in Frage.

Um plattenförmige Träger, die mit katalytisch wirkenden Verbindungen beschichtet sind, kontinuierlich herzustellen, erweist es sich als besonders vorteilhaft, daß zunächst emaillierfähiger Stahl von einem Coil abgezogen und in Reihe profiliert sowie in Maßabschnitte aufgetrennt wird und ferner nachfolgend die Maßabschnitte in Reihe entfettet oder gebeizt, auf diese eine Emaille aufgtragen und eingebrannt wird, anschließend die Maßabschnitte in einem bewegten Bad eines Katalysatorschlickers benetzt und schließlich gebrannt und gegebenenfalls nachfolgend kalziniert werden. Ein derartiges Beschichtungsverfahren ist technisch einfach durchzuführen. Durch die Formgebung des plattenförmigen Trägers vor seiner Beschichtung mit den katalytisch wirkenden Verbindungen ist nachfolgend nunehr eine Trocknung und gegebenenfalls eine Kalzinierung der Beschichtung durchzuführen. Die Kalzinierung ist als thermische Nachbehandlung nur in Fällen extremer erosiver Belastung der Trocknung der katalytisch wirkenden Verbindungen auf dem metallischen Träger nachzuschalten.

Mit dem vorgeschlagenen Verfahren zur Herstellung eines plattenförmigen Trägers katalytisch wirkender Verbindungen können umlaufende Regenerativ-Wärmetauscher mit Trägern katalytisch wirkender Verbindungen sowohl für die Oxidation von Kohlenmonoxid, als auch für die Reduktion der Stickoxide gleichermaßen versehen werden. Hierzu lassen sich in die Mischungen der katalytisch wirkenden Verbindungen für die Stickoxidreduzierung bzw. in die des zugehörigen Schlickers solche für die Oxidation des Kohlenmonoxids einbeziehen. Entsprechend dem unterschiedlichen Niveau optimaler Reaktionstemperaturen für die Reduktion der Stickoxide einerseits und die der Oxidation des Kohlenmonoxids andererseits werden jedoch vorteilhaft katalytisch wirkende Beschichtungen für Stickoxidreduzierung heißgasseitig und gegebenenfalls durch wärmetauschende Flächen hiervor getrennt Beschichtungen für die Oxidation des Kohlenmonoxids kaltgasseitig vorgesehen. Unter heiß- und kaltgasseitig ist hierbei nicht nur die Zusammenfassung innerhalb eines einzigen Katalysators, sondern auch die Aufteilung auf getrennt voneinander angeordnete Katalysatoren, beispielsweie auf solche am sogenannten heißen Ende einer Kesselanlage, in unmittelbarer Nachschaltung zum Kesssel für die Stickoxidreduzierung und am sogenannten kalten Ende, also beispielsweise in unmittelbarer Zuordnung zu einer Naßentschwefelung, innerhalb des Abgasstroms einer Kesselanlage zu verstehen. Mit einer derartigen Lösung kann der Gefahr begegnet werden, daß Primärmaßnahmen zur Stickoxidreduzierung auf der Seite der Feuerung mit einer erhöhten Abgabe von Kohlenmonoxid in den Abgasen an die Umgebung erkauft wird, die die Umwelt gleichermaßen belastet.

Die Herstellung von plattenförmigen Trägern mit katalytisch wirkenden Verbindungen für den Aufbau von Katalysatoren zur Reduzierung der Stickoxide in den Abgasen von Verbrennungsanlaqen wird in dem folgenden Beispiel näher beschrieben.

Beispiel

Auf das metallische Grundgerüst in Form von Trägerplatten wurde an einem Endlos-Förderband hängend beim Durchgang durch eine Spritzkabine eine Grundemaille-Fritte aufgetragen. Die Trägerplatten wurden anschließend in einem Vortrockner bei einer Temperatur von 200°C vorgetrocknet und anschließend in einem Zeitraum zwischen 6 und 10 Minuten durch einen Brennofen mit einer Temperatur von 820°C geführt. Die Trägerplatten wurden anschließend innerhalb eines Zeitraums von 30 Minuten in Umgebungsluft abgekühlt und dann für einen Zeitraum von einer Minute in ein Katalysatorschlickerbad eingetaucht und wieder aus dem Band entfernt. Anschließend wurden die mit dem Schlickerbad beschichteten Trägerplatten in ruhender Umgebungsluft für einen Zeitraum von 10 Stunden getrocknet. Der langgestreckte Behälter für das Schlickerband wies eine rechteckige Grundfläche auf, wobei über an den Seitenwänden befestigte Schwingungserreger während des Tauchvorgangs der Trägerplatten ungeregelte Schwingungen im Behälter erzeugt wurden.

Das Katalysatorschlickerbad bestand hierbei aus einer Mischung des Pulvers Titanoxid, dotiert mit Obergangsmetalloxiden, insbesondere Vanadium- und Wolframoxiden als katalytisch wirkenden Verbindungen und einem Wasserglas mit :olloidalem Siliziumoxid als Bindemittel.

Zur Erhöhung der Abriebfestigkeit enthielt das Schlickerbad Mineralfasern. Als thioxotropierend wirkendes Mittel war außerdem eine Carboxypolymethylen-Wassermischung zugesetzt. Schließlich enthielt das Schlickerbad als Netzmittel auch noch einen organischen Ester ("Glydol" der Firma Zschimmer & Schwarz).

In eine stationäre Versuchsstrecke wurden nach dem beschriebenen Verfahren beschichtete Trägerplatten eingebaut. Die Überströmlänge betrug 0,9 m. Durch diese Versuchsstrecke wurde ein Abgasteilstrom eines mit Braunkohle gefeuerten Kessels mit einer Temperatur von 340°C und einer Leerrohrgeschwindigkeit von 12 m/sec. geführt. Die Zugabe des Reduktionsmittels (Ammoniak) zu diesem Abgasteilstrom erfolgte äquimolar, d.h. das Verhältnis der in den Abgasen des Kessels enthaltenen Stickoxide zu dem zugegebenen Ammoniak betrug 1. Unter diesen Bedingungen wurde eine Stickoxidreduktion von 82% erzielt.

## Patentansprüche

1. Verfahren zur Herstellung eines plattenförmigen Trägers katalytisch wirkender Verbindungen unter Entfetten bzw. Beizen eines profilierten, vollflächigen oder gitterförmigen metallischen Grundgerüsts mit dem Auftragen einer Emaillebeschichtung, die eine porenarme Unterschicht und eine rauhe Deckschicht hoher Säurefestigkeit ausbildet und nachfolgendem Einbrennen als Grundemaille,
**dadurch gekennzeichnet**, daß das mit der Grundemaille beschichtete Grundgerüst dem Brand nachfolgend zunächst mit einem sich unter dem Einfluß von Scherkräften verflüssigendem Katalysatorschlicker aus einem Pulver katalytisch wirkender Verbindungen, einem Bindemittel und Wasser durch Eintauchen in ein bewegtes Katalysatorschlickerbad benetzt und das benetzte Grundgerüst unter Aufrechterhaltung der Bewegung des Schlickerbades wieder aus dem Bad entfernt und anschließend einer Trocknung zugeführt wird.

2. Verfahren nach Anspruch 1, dadurch gekennzeichnet, daß das mit der Emaille versehene Grundgerüst über eine Fördereinrichtung kontinuierlich mit dem Katalysatorschlicker unter Eintauchen in das Schlickerbad in einer Abwärtsführung und Entnahme aus demselben in einer Aufwärtsführung benetzt wird.

3. Verfahren nach Anspruch 1, dadurch gekennzeichnet, daß das mit der Emaille versehene Grundgerüst über eine Fördereinrichtung im wesentlichen horizontal geführt und hierbei diskontinuierlich mit dem Katalysatorschlicker unter periodischem Anheben sowie Absenken des Schlickerbads benetzt und nachfolgend weitergefördert wird.

4. Verfahren nach Anspruch 1, dadurch gekennzeichnet, daß das Schlickerbad durch Eintauchen eines Schwingungserregers oder Rührers in das Bad des Katalysatorschlickers direkt bewegt wird.

5. Verfahren nach Anspruch 1, dadurch gekennzeichnet, daß indirekt ausgehend von einer oder mehreren Gefäßwandungen des Schlickerbades die Badflüssigkeit bewegt wird.

6. Verfahren nach Anspruch 1, dadurch gekennzeichnet, daß der Emaillefritte blähfähige Mittel zugesetzt werden.

7. Verfahren nach Anspruch 1, dadurch gekennzeichnet, daß dem Katalysatorschlicker Mittel zugesetzt werden, die die Verflüssigung des Schlickers unter der Einwirkung von Scherkräften unterstützen.

8. Verfahren nach Anspruch 1 oder folgenden, dadurch gekennzeichnet, daß das Pulver katalytisch wirkender Verbindungen in einer solchen Korngrößenverteilung eingesetzt wird, daß weniger als 1 Gew.% des Pulvers einen Korndurchmesser < 10 μm und weniger als 5 Gew.% einen Korndurchmesser > 200 μm aufweisen.

9. Verfahren nach Anspruch 1 oder folgenden, dadurch gekennzeichnet, daß bis zu 2% Netzmittel, bis zu 5% eine Verflüssigung des Schlickers bewirkende Mittel, sowie Wasser und/oder Bindemittel bis zu einer Schlickerkonsistenz entsprechend der gewünschten Stärke der Beschichtung dem Schlickerbad zugesetzt werden.

10. Verfahren nach Anspruch 1 oder folgenden, dadurch gekennzeichnet, daß der Benetzung und nachfolgenden Trocknung des Katalysatorschlickers auf dem emaillierten, metallischen Grundgerüst eine Kalzinierung nachgeschaltet wird.

11. Verfahren nach einem oder mehreren der vorangehenden Ansprüche, dadurch gekennzeichnet, daß der Trocknung des benetzten oder der Kalzinierung des beschichteten Trägers folgend eine Imprägnierung mit einem Alkylsilikat oder einer Lösung desselben vorgenommen wird.

12. Verfahren zur kontinuierlichen Herstellung plattenförmiger, katalytisch wirkende Verbindungen aufweisender Träger nach Anspruch 1, dadurch gekennzeichnet, daß zunächst ein emaillierfähiger Stahl von einem Coil abgezogen und in Reihe profiliert sowie in Maßabschnitten aufgetrennt wird und ferner nachfolgend die Maßabschnitte in Reihe entfettet oder gebeizt, auf diese eine Emaille aufgetragen und eingebrannt wird, anschließend die Maßabschnitte in einem bewegten Bad eines Katalysatorschlickers benetzt und schließlich getrocknet werden.

## Claims

1. Method for the preparation of a plate-like support of catalytically active compounds, with degreasing or etching of a textured, solid-surfaced or grid-like metal base structure, with the application of an enamel coating which forms a low-porosity bottom layer and a rough cover layer of high acid resistance, followed by firing-on as an enamel primer,
characterized in that the base structure coated with the enamel primer, after firing, is wetted first with a catalyst slurry liquefying under the effect of shearing forces and composed of a powder of catalytically active compounds, a binding agent and water, by immersion into a moving catalyst slurry, and the wetted base structure is removed from the bath while maintaining the movement of the slurry, and then is subjected to drying.

2. Method according to claim 1, characterized in that the base structure provided with the enamel is wetted continuously with the catalyst slurry by a conveyor system by immersion into the slurry in a downward guidance and removal from same in an upward guidance.

3. Method according to claim 1, characterized in that the base structure provided with the enamel is carried substantially horizontally through a conveyor system and at the same time wetted discontinuously with the catalyst slurry by the periodical raising and lowering of the slurry bath, and then carried forward.

4. Method according to claim 1, characterized in that the slurry bath is moved directly by the immersion of a vibrator or stirrer into the bath of the catalyst slurry.

5. Method according to claim 1, characterized in that the bath liquid is moved indirectly from one or more vessel walls of the slurry bath.

6. Method according to claim 1, characterized in that blowing agents are added to the enamel grits.

7. Method according to claim 1, characterized in that agents are added to the catalyst slurry which assist the liquefaction of the slurry by the action of shearing forces.

8. Method according to claim 1 or the following, characterized in that the powder of catalytically acting compounds is used in such a grain size distribution that less than 1 wt.-% of the powder has a grain diameter < 10 $\mu$m and less than 5 wt.-% has a grain diameter > 200 $\mu$m.

9. Method according to claim 1 or the following, characterized in that up to 2% wetting agent, up to 5% of an agent producing liquefaction of the slurry, as well as water and/or binding agent are added to the slurry up to a slurry consistency corresponding to the desired thickness of the coating.

10. Method according to claim 1 or the following, characterized in that the wetting and following drying of the catalyst slurry on the enameled, metal base structure is followed by a calcination.

11. Method according to one or more of the foregoing claims, characterized in that following the drying of the wetted support or the calcination of the coated support, an impregnation with an alkyl silicate or a solution thereof is performed.

12. Method for the continuous production of plate-like supports bearing catalytically acting compounds in accordance with claim 1, characterized in that first an enameling steel is drawn from a coil, shaped and cut serially into sized sections, and then the sections are degreased or etched serially, an enamel is applied to them and fired, and then the sections are wetted in a moving bath of a catalyst slurry and finally dried.

## Revendications

1. Procédé de préparation d'un support en forme de plaque pour des composés à effet catalytique, avec dégraissage ou décapage d'une charpente de base métallique à surface profilée pleine ou en treillis, application d'un revêtement émaillé comme émail de fond, formant une sous-couche peu poreuse et une couche de surface rugueuse, très résistante aux acides, et cuisson subséquente,
caractérisé par le fait que la charpente de base enduite de l'émail de fond est, après la cuisson, d'abord mouillée de barbotine de catalyseur se liquéfiant sous l'action de forces de cisaillement, constituée d'une poudre de composés à effet catalytique, d'un liant et d'eau, par immersion dans un bain de barbotine de catalyseur entraîné en mouvement, et la charpente de base ainsi mouillée est retirée du bain et est amenée ensuite au séchage.

2. Procédé selon la revendication 1, caractérisé par le fait que la charpente de base pourvue de l'émail est, par l'intermédiaire d'un dispositif transporteur, mouillée en continu de barbotine de catalyseur avec immersion dans le bain de barbotine par guidage vers le bas et évacuation du bain par guidage vers le haut.

3. Procédé selon la revendication 1, caractérisé par le fait que la charpente de base pourvue de l'émail est guidée sensiblement horizontalement par l'intermédiaire d'un dispositif transporteur et est alors mouillée en discontinu de barbotine de catalyseur par soulèvement et abaissement périodiques du bain de barbotine, après quoi elle continue à avancer guidée par le transporteur.

4. Procédé selon la revendication 1, caractérisé par le fait que le bain de barbotine est directement entraîné en mouvement en plongeant dans le bain de la barbotine de catalyseur un excitateur d'oscillations ou un agitateur.

5. Procédé selon la revendication 1, caractérisé par le fait que le liquide de bain est entraîné indirectement en mouvement à partir d'une ou plusieurs parois du récipient contenant le bain de barbotine.

6. Procédé selon la revendication 1, caractérisé par le fait que l'on ajoute à la composition d'émail des agents gonflables.

7. Procédé selon la revendication 1, caractérisé par le fait que l'on ajoute à la barbotine de catalyseur des agents favorisant la liquéfaction de la barbotine sous l'action de forces de cisaillement.

8. Procédé selon la revendication 1 ou les revendications suivantes, caractérisé par le fait que l'on ajoute à la poudre des composés à effet catalytique présentant une distribution granulométrique telle que moins de 1 % en poids de la poudre présente un diamètre de grain <10 $\mu$m et moins de 5 % en poids présentent un diamètre de grain> 200 $\mu$m.

9. Procédé selon la revendication 1 ou les revendications suivantes, caractérisé par le fait que l'on ajoute au bain de barbotine jusqu'à 2 % de mouillants, jusqu'à 5 % d'agents provoquant une liquéfaction de la barbotine, ainsi que de l'eau et/ou des liants jusqu'à une consistance de la barbotine correspondant à l'épaisseur souhaitée de l'enduction.

10. Procédé selon la revendication 1 ou les revendications suivantes, caractérisé par le fait que le mouillage et le séchage subséquent de la barbotine de catalyseur sur la charpente de base métallique émaillée sont suivis d'une calcination.

11. Procédé selon l'une ou plusieurs des revendications précédentes, caractérisé par le fait qu'à la suite du séchage du support mouillé ou de la calcination du support enduit, on procède à une imprégnation avec un silicate d'alkyle ou une solution de celui-ci.

12. Procédé de préparation continue de supports en forme de plaque présentant des composés à effet catalytique, selon la revendication 1, caractérisé par le fait que l'on déroule d'abord un acier émaillable d'une bobine et on le pourvoit de profilés, on le divise en tronçons aux dimensions voulues, ensuite on dégraisse ou décape les tronçons alignés, on y applique un émail que l'on fait cuire au four, puis on mouille les tronçons dans un bain de barbotine de catalyseur entraîné en mouvement et finalement on les sèche.